# EUROPEAN PATENT APPLICATION

(11) **EP 4 834 960 A1**
(43) Date of publication of application: **04.11.2026**
(21) Application number: 24912749.9
(22) Date of filing: 23.12.2024
(51) Int. Cl.: C08F 214/26, C08F 210/02, C08K 5/02, C08L 27/18

(54) **SOLID MATTER, COMPOSITION, AND MOLDED BODY**

(30) Priority: 27.12.2023 JP 2023220827
(71) Applicant: AGC Inc., Chiyoda-ku Tokyo 100-8405 (JP)
(72) Inventor: TAGUCHI Daisuke, Tokyo 100-8405 (JP); TOYODA Mizuna, Tokyo 100-8405 (JP); YANAGAWA Haruki, Tokyo 100-8405 (JP)
(74) Representative: Müller-Boré & Partner Patentanwälte PartG mbB
(86) International application number: PCT/JP2024/045521
(87) International publication number: WO 2025/142862

(57) **Abstract**

The object of the present invention is to provide a solid material excellent in grindability, and to provide a composition comprising the solid material, a molded product obtained by molding the solid material, and a molded product obtained by molding the composition. The solid material of the present invention is a solid material comprising: a copolymer having a unit based on tetrafluoroethylene, a unit based on ethylene, and a unit based on a specific compound selected from the group consisting of a compound represented by formula (1) CX¹₂=CX²(CF₂)ₘF and a compound represented by formula (2) CF₂=CF-O-(CF₂)ₙF; the specific compound; and a solvent; wherein the solvent contains a fluorine-containing solvent containing a hydrogen atom and a fluorine atom and optionally having an ether bond; the fluorine-containing solvent contains a hydrofluorocarbon having a group represented by formula (3) CF₃(CF₂)ₚ-*; and the ratio of the total content of the hydrofluorocarbon and the specific compound to the total content of the solvent and the specific compound, is 90.0 mass% or less.

## Description

### TECHNICAL FIELD

The present invention relates to a solid material, a composition and a molded product.

### BACKGROUND ART

An ethylene/tetrafluoroethylene copolymer (hereinafter also referred to as "ETFE") is excellent in heat resistance, weather resistance, electrical insulation, non-adhesiveness, water/oil repellency, etc., and has high moldability and mechanical strength among fluororesins. Thus, by a melt-molding method such as extrusion, blow molding, injection molding or rotational molding, various molded products such as electrical wire coverings, tubes, sheets, films, filaments, pump casings, joints, packings, linings and coatings have been produced.

For example, Patent Document 1 discloses a method for recovering a fluorinated ether, comprising a step of producing a wet copolymer by suspension polymerization, solution polymerization or bulk polymerization in the presence of a predetermined fluorinated ether, a step of heating the wet copolymer in a container to vaporize and discharge a volatile substance including the fluorinated ether, and a step of transferring the vaporized volatile substance to a cooling means and cool the volatile substance.

### PRIOR ART DOCUMENTS

### PATENT DOCUMENTS

Patent Document 1: Japanese Patent No. 5569660

### DISCLOSURE OF INVENTION

### TECHNICAL PROBLEM

ETFE is required to be excellent in various properties, when used as a material constituting a molded product.

With reference to the method described in Patent Document 1, the present inventors have produced ETFE, evaluated a solid material containing the produced ETFE and as a result found that there is room for improvement regarding grindability of the solid material.

Under these circumstances, the object of the present invention is to provide a solid material excellent in grindability. Another object of the present invention is to provide a composition comprising the solid material, a molded product obtained by molding the solid material, and a molded product obtained by molding the composition.

### SOLUTION TO PROBLEM

The present inventors have conducted extensive studies on the above objects and found that the following solid material is a solid material excellent in grindability, and accomplished the present invention. That is, a solid material comprising a copolymer having a unit based on tetrafluoroethylene, a unit based on ethylene, and a unit based on a specific compound to be described below; the specific compound; and a solvent that is a compound different from the specific compound; wherein the solvent contains a fluorine-containing solvent containing a hydrogen atom and a fluorine atom and optionally having an ether bond; the fluorine-containing solvent contains a hydrofluorocarbon having a group represented by formula (3) to be described below; and the ratio of the total content of the hydrofluorocarbon and the specific compound to the total content of the solvent and the specific compound is 90.0 mass% or less.

That is, the present inventors have found that the above objects can be achieved by the following configurations.
[1] A solid material comprising:
   a copolymer having a unit based on tetrafluoroethylene, a unit based on ethylene, and a unit based on a specific compound selected from the group consisting of a compound represented by formula (1) to be described below and a compound represented by formula (2) to be described below,
   the specific compound, and
   a solvent that is a compound different from the specific compound,
   wherein the solvent contains a fluorine-containing solvent containing a hydrogen atom and a fluorine atom and optionally having an ether bond,
   the fluorine-containing solvent contains a hydrofluorocarbon having a group represented by formula (3) to be described below, and
   the ratio of the total content of the hydrofluorocarbon and the specific compound to the total content of the solvent and the specific compound, is 90.0 mass% or less.
[2] The solid material according to [1], wherein the content of the unit based on tetrafluoroethylene relative to all units contained in the copolymer is 48.00 to 64.90 mol%.
[3] The solid material according to [1] or [2], wherein the content of the unit based on ethylene relative to all units contained in the copolymer is 35.00 to 51.90 mol%.
[4] The solid material according to any one of [1] to [3], wherein the content of the unit based on the specific compound in the copolymer relative to all units contained in the copolymer is 0.10 to 5.00 mol%.
[5] The solid material according to any one of [1] to [4], wherein the fluorine-containing solvent further contains a hydrofluoroether.
[6] The solid material according to [5], wherein the hydrofluoroether contains a compound represented by formula (4) to be described below.
[7] The solid material according to any one of [1] to [6], wherein the solvent further contains water.
[8] The solid material according to any one of [1] to [7], wherein the content of the solvent relative to the total mass of the solid material is 0.01 to 2 mass%.
[9] The solid material according to any one of [1] to [8], wherein the content of the hydrofluorocarbon relative to the total mass of the solid material is 0.001 to 1.5 mass%.
[10] A composition comprising the solid material as defined in any one of [1] to [9], and at least one component selected from the group consisting of a resin other than the copolymer, a thermal stabilizer, an antioxidant, a coloring agent, an ultraviolet absorbing agent, a filler, a crosslinking agent, a crosslinking aid and an organic peroxide.
[11] A molded product, obtained by molding the solid material as defined in any one of [1] to [9].
[12] A molded product, obtained by molding the composition as defined in [10].

### ADVANTAGEOUS EFFECTS OF INVENTION

According to the present invention, it is possible to provide a solid material excellent in grindability. Further, according to the present invention, it is possible to provide a composition comprising the solid material, a molded product obtained by molding the solid material, and a molded product obtained by molding the composition.

### DESCRIPTION OF EMBODIMENTS

Meanings of terms used in this specification are as follows.
" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

A "unit" generically means an atomic group derived from one molecule of a monomer, directly formed by polymerization of the monomer, and an atomic group obtained by chemical conversion of a part of the atomic group. In the following, in some cases, units derived from an individual monomer will be referred to as the monomer name, followed by "unit".

A "TFE unit" is a unit based on tetrafluoroethylene of a copolymer, an "E unit" is a unit based on ethylene of the copolymer. Further, a "A unit" is a unit based on the specific compound to be described below.

A "solvent" means a substance that is liquid at 25°C under 1013 hPa.

### [Solid material]

The solid material of the present invention (hereinafter also referred to as "the present solid material") contains a copolymer having a TFE unit, an E unit and an A unit based on the specific compound to be described below, and further contains the specific compound, and a solvent that is a compound different from the specific compound. The present solid material contains, as the solvent, at least a hydrofluorocarbon having a group represented by formula (3) to be described below.

The present solid material is also characterized in that the ratio of the total content of the hydrofluorocarbon and the specific compound to the total content of the solvent and the specific compound (hereinafter also referred to as "ratio S") is 90.0 mass% or less.

The detailed reason why the present solid material is a solid material excellent in grindability has not clearly understood yet, however, it is considered to be because in the present solid material, among components used for production of the copolymer or the solid material, the total component of the specific compound and the compound represented by formula (3) to be described below is a predetermined value or less. Such specific compound and compound represented by formula (3) are relatively highly lipophilic, and thus when contained in the solid material, they are likely to swell the copolymer having the TFE unit, the E unit and the A unit and resultingly to increase the hardness of the solid material. In the present solid material, since the total content of the specific compound and the compound represented by formula (3) is a predetermined value or less, the copolymer is hardly swollen, and the hardness of the solid material becomes suitable for grinding.

Here, the solid material being excellent in grindability means that by grinding the solid material, a powder with a narrow particle size distribution and with a uniform particle size is likely to be produced.

Now, the components contained in the present solid material will be described.

### (Copolymer)

The present solid material contains a copolymer having an E unit, a TFE unit and an A unit.

Hereinafter, unless otherwise specified, a mere description "copolymer" refers to a copolymer having an E unit, a TFE unit and an A unit.

The copolymer is a copolymer having a TFE unit based on tetrafluoroethylene, an E unit based on ethylene, and an A unit based on the specific compound selected from the group consisting of a compound represented by formula (1) and a compound represented by formula (2).

CX¹₂=CX²(CF₂)ₘF formula (1)

CF₂=CF-O-(CF₂)ₙF formula (2)

In formula (1), X¹ and X² are each independently a hydrogen atom or a fluorine atom, and m is an integer of 1 to 6.

In formula (2), n is an integer of 1 to 6.

In the compound represented by formula (1), X¹ and X² are preferably hydrogen atoms in view of polymerizability.

m is preferably an integer of 2 to 6, more preferably an integer of 2 to 4, further preferably 4.

The compound represented by formula (1) is preferably CH₂=CH(CF₂)₂F, CH₂=CH(CF₂)₄F, CH₂=CH(CF₂)₆F, or CH₂=CF(CF₂)₄F, more preferably CH₂=CH(CF₂)₄F (hereinafter also referred to as "PFBE").

Specific examples of the compound represented by formula (2) include CF₂=CF-O-(CF₂)F, CF₂=CF-O-(CF₂)₂F, CF₂=CF-O-(CF₂)₃F, CF₂=CF-O-(CF₂)₄F, CF₂=CF-O-(CF₂)₅F, and CF₂=CF-O-(CF₂)₆F. Among them, preferred is CF₂=CF-O-(CF₂)₃F corresponding to a compound wherein n is 3.

The copolymer may have, as the A unit, one of a unit based on a compound represented by formula (1) (hereinafter also referred to as "A1 unit"), and a unit based on a compound represented by formula (2) (hereinafter also referred to as "A2 unit"), or may have both the A1 unit and the A2 unit.

That is, in a case where the copolymer has both the A1 unit and the A2 unit, the "content of the unit A" means a total content of the A1 unit and the A2 unit.

The copolymer is preferably a copolymer having the TFE unit, the E unit and the A1 unit, or a copolymer having the TFE unit, the E unit and the A2 unit, and in view of excellent long-term folding resistance, more preferably a copolymer having the E unit, the TFE unit and the A1 unit.

The content of the TFE unit relative to all units contained in the copolymer is preferably 45.00 to 69.99 mol%, more preferably 48.00 to 64.90 mol%, further preferably 50.00 to 64.50 mol%. When the content is the lower limit value or more, the resulting molded product will be more excellent in chemical resistance and heat resistance during long-term use, and when the content is at most the upper limit value or less, the resulting molded product will be more excellent in mechanical properties.

The content of the E unit relative to all units contained in the copolymer is preferably 30.00 to 54.99 mol%, more preferably 35.00 to 51.90 mol%, further preferably 35.00 to 49.50 mol%. When the content is the lower limit value or more, the resulting molded product will be more excellent in mechanical properties, and when the content is the upper limit value or less, the resulting molded product will be more excellent in heat resistance and weather resistance during long-term outdoor use.

The content of the A unit relative to all units contained in the copolymer is preferably 0.01 to 10.00 mol%, more preferably 0.10 to 5.00 mol%, further preferably 0.50 to 4.00 mol%. When the content is the lower limit value or more, a molded product excellent in abrasion resistance will be formed, and when the content is the upper limit value or less, a molded product excellent in dimensional stability will be formed.

In the copolymer, the total content of the TFE unit and the E unit relative to all units contained in the copolymer is preferably 90.00 to 99.99 mol%, more preferably 95.00 to 99.90 mol%, further preferably 96.00 to 99.50 mol%.

The copolymer may contain a unit based on a monomer other than tetrafluoroethylene, ethylene and the specific compound.

Specific examples of the other monomers include fluoroolefins (for example, vinyl fluoride, vinylidene fluoride, trifluoroethylene, and hexafluoroisobutylene, excluding the specific compound), CF₂=CFORf¹SO₂Y¹ (wherein Rf¹ is a C₁₋₁₀ perfluoroalkylene group optionally containing an oxygen atom between carbon atoms, Y' is a halogen atom or a hydroxyl group), CF₂=CFORf²CO₂Y² (wherein Rf² is a C₁₋₁₀ perfluoroalkylene group optionally containing an oxygen atom between carbon atoms, and Y² is a hydrogen atom or a C₁₋₃ alkyl group), CF₂=CF(CF₂)pOCF=CF₂ (wherein p is 1 or 2), fluorinated monomers having a cyclic structure (for example, perfluoro(2,2-dimethyl-1,3-dioxole), 2,2,4-trifluoro-5-trifluoromethoxy-1,3-dioxole, and perfluoro(2-methylene-4-methyl-1,3-dioxolane)), itaconic acid, itaconic anhydride, citraconic acid and citraconic anhydride. Among them, preferred are itaconic acid, itaconic anhydride, citraconic acid and citraconic anhydride, more preferred is itaconic anhydride.

In a case where the copolymer has a unit based on the other monomer, the content of the unit based on the other monomer relative to all units contained in the copolymer is preferably 0.01 to 2.00 mol%, more preferably 0.10 to 1.00 mol%.

As the copolymer, preferred is an embodiment consisting of the TFE unit, the E unit and the A unit, more preferred is an embodiment consisting of the TFE unit, the E unit and the A1 unit.

In view of more excellent grindability of the present solid material, the content of the copolymer in the present solid material is preferably 99 mass% or more, more preferably 99.5 mass% or more, further preferably 99.8 mass% or more. In view of more excellent folding resistance of the molded product, the content of the copolymer in the present solid material is preferably 99.99 mass% or less, more preferably 99.95 mass% or less.

### <Melt flow rate>

The melt flow rate (hereinafter also referred to as "MFR") of the copolymer is preferably 1 to 60 g/10min, more preferably 2 to 50 g/10min.

When MFR of the copolymer is the lower limit value or more, a molded product excellent in flowability when melt-molded will be formed. When MFR of the copolymer is the upper limit value or less, a molded product excellent in abrasion resistance at high temperature will be formed.

Specific examples of a method of adjusting MFR of the copolymer to be within the above range include a method of adjusting the molecular weight of the copolymer. The larger the molecular weight of the copolymer is, the smaller MFR is.

MFR of the copolymer is obtained by measuring the mass of the solid material which flows out from an orifice with a diameter of 2 mm and a length of 8 mm in 10 minutes at a temperature of 297°C under a load of 49N in accordance with ASTM D3159. The copolymer is the main component of the solid material, and the components other than the copolymer have substantially no influence on the measurement of MFR. Thus, the MFR measured with respect to the solid material can be regarded as MFR of the copolymer.

### <Melting point>

In view of more excellent mechanical strength of the resulting molded product when used at high temperature, the melting point of the copolymer is preferably 210°C or higher, more preferably 215°C or higher, further preferably 220°C or higher.

In view of excellent moldability of the solid material, the upper limit of the melting point of the copolymer is preferably 290°C or lower, more preferably 280°C or lower, particularly preferably 270°C or lower.

Specific examples of a method of adjusting the melting point of the copolymer to be within the above range include a method of lowering the polymerization temperature at the time of production of the copolymer, and a method of adjusting the content of the A unit in the copolymer.

The melting point of the copolymer is a temperature corresponding to an endothermic peak detected when the solid material is heated at 10°C/min in the air atmosphere using a scanning differential thermal analyzer. Like MFR, the melting point measured with respect to the solid material can be regarded as the melting point of the copolymer.

### (Specific compound)

The present solid material contains the specific compound.

Specific examples and a preferred embodiment of the specific compound are the same as those of the specific compound from which the A unit is derived.

The specific compound contained in the present solid material may be both the compound represented by formula (1) and the compound represented by formula (2), but is preferably either one of the compound represented by formula (1) and the compound represented by formula (2), and is more preferably the compound represented by formula (1).

Further, the specific compound from which the A unit is derived, contained in the copolymer, and the specific compound contained in the present solid material, are preferably the same. For example, in a case where the copolymer contains a PFBE unit as the A unit, the present solid material preferably contains PFBE as the specific compound.

In view of more excellent grindability of the solid material, the content of the specific compound contained in the present solid material is preferably 0.1 mass% or less, more preferably 0.05 mass% or less, further preferably 0.03 mass% or less.

In view of more excellent folding resistance of the molded product, the content of the specific compound contained in the present solid material is preferably 0.0001 mass% or more, more preferably 0.002 mass% or more.

The contents of the specific compound and the solvent (excluding water) to be described below, contained in the solid material, can be measured by analyzing the volatile component when the solid material is heated to 240°C using headspace GC/MS apparatus.

### (Solvent)

The present solid material contains a solvent, provided that the solvent contained in the present solid material is a compound that is different from the specific compound. Specific examples of the solvent contained in the present solid material include water and organic solvents such as a hydrofluorocarbon, a hydrofluoroether, a perfluorocarbon, an alcohol and a hydrocarbon.

In the present solid material, the solvent contains a fluorine-containing solvent containing a hydrogen atom and a fluorine atom, optionally having an ether bond (hereinafter also referred to as "solvent F"). The solvent F contains a hydrofluorocarbon having a group represented by formula (3) (hereinafter also referred to as "solvent F3").

CF₃(CF₂)ₚ-* (3)

In formula (3), p is an integer of 1 or more, and * indicates a bonding site to the adjacent atom.

p is preferably an integer of 1 to 5, more preferably an integer of 1 to 3.

The solvent F3 is preferably a compound represented by formula (3a).

CF₃(CF₂)ₚ-R (3a)

In formula (3a), R is a hydrogen atom, or a C₁₋₆ fluoroalkyl group or alkyl group. In the fluoroalkyl group or alkyl group represented by R, the carbon atom bonded to the CF₃(CF₂)ₚ- group has at least one hydrogen atom bonded thereto.

The definition and a preferred embodiment of p in the formula (3a) are the same as those of p in the formula (3).

R is preferably a hydrogen atom or a C₁₋₃ fluoroalkyl group, more preferably a hydrogen atom.

The number of carbon atoms in the compound represented by formula (3a) is preferably 3 to 8, more preferably 4 to 7.

Specific examples of the solvent F3 include CF₃CFHCF₂CF₂CF₃, CF₃(CF₂)₄H, CF₃CF₂CFHCF₂CF₃, CF₃CFHCFHCF₂CF₃, CF₂HCFHCF₂CF₂CF₃, CF₃(CF₂)₅H, CF₃CH(CF₃)CF₂CF₂CF₃, CF₃CF(CF₃)CFHCF₂CF₃, CF₃CH(CF₃)CFHCF₂CF₃, CF₃CF₂CH₂CH₃ and CF₃(CF₂)₃CH₂CH₃, and among them, preferred is CF₃(CF₂)₅H.

The content of the solvent F3 relative to the total mass of the solid material is preferably 0.001 to 2.0 mass%, more preferably 0.001 to 1.5 mass%, further preferably 0.001 to 1.2 mass%.

When the content is the upper limit value or less, the solid material will be more excellent in grindability, and when the content is the lower limit value or more, the grain size of the solid material will be more uniform, and more excellent handling efficiency will be achieved.

In the present solid material, the solvent F preferably further contains a hydrofluoroether.

As the hydrofluoroether, a fluorine-containing solvent containing a hydrogen atom and a fluorine atom, and having an ether bond, may be used.

In particular, the hydrofluoroether preferably contains a compound represented by formula (4) (hereinafter also referred to as "solvent F4").

R¹-O-R² (4)

In formula (4), R¹ is a C₂₋₆ fluoroalkyl group, R² is a C₁₋₄ fluoroalkyl group or alkyl group, and the total number of carbon atoms of R¹ and R² is 8 or less.

In a case where the present solid material contains the hydrofluoroether (more preferably the solvent F4), the bulk density of the solid material tends to be high, and the solid material exhibits excellent transferability in a production line.

R¹ in formula (4) is preferably a C₂₄ fluoroalkyl group, more preferably a C₂ or C₃ fluoroalkyl group.

R² in formula (4) is preferably a C₁₋₃ fluoroalkyl group or alkyl group, more preferably a C₁ or C₂ fluoroalkyl group or alkyl group, further preferably a C₂ fluoroalkyl group.

The total number of carbon atoms of R¹ and R² in formula (4) is preferably 3 to 7, more preferably 4 to 6, further preferably 4 or 5.

Specific examples of the solvent F4 include CF₃CH₂OCF₂CF₂H, CF₃(CF₃)CFCF₂OCH₃, CF₃(CF₂)₃OCH₃, CF₃(CF₂)₃OC₂H₅, CF₃(CF₂)₂C₃F₇OCH₃ and (CF₃)₂CFOCH₃, and preferred is CF₃CH₂OCF₂CF₂H.

In a case where the present solid material contains the solvent F4, the content of the solvent F4 relative to the total mass of the solid material is preferably 0.0001 to 0.4 mass%, more preferably 0.0001 to 0.3 mass%.

In a case where the present solid material contains the hydrofluoroether, the content of the hydrofluoroether relative to the total mass of the solid material is preferably 0.0001 to 0.5 mass%, more preferably 0.0001 to 0.4 mass%.

The present solid material may contain a fluorine-containing solvent which contains a hydrogen atom and a fluorine atom, and which is included in neither the solvent F3 nor the hydrofluoroether (hereinafter also referred to as "the other fluorine-containing solvent").

Specific examples of the other fluorine-containing solvent include hydrofluorocarbons other than the solvent F3, such as 1,1,2,2-tetrafluorocyclobutane, CF₃CFHCFHCF₃, CF₃CF(CF₃)CFHCFHCF₃, CF₃CH₂CF₂CH₃ (HFC-365mfc), CF₂ClCFCl₂, CF₂ClCCl₂F, and CF₃CClFCFClCF₃, and preferred is CF₃CH₂CF₂CH₃.

In a case where the present solid material contains the other fluorine-containing solvent, the content of the other fluorine-containing solvent relative to the total mass of the solid material is preferably 0.0001 to 0.4 mass%, more preferably 0.0001 to 0.3 mass%.

In the present solid material, the solvent preferably further contains water.

When the present solid material contains water, more excellent mechanical properties and moldability will be obtained.

In a case where the present solid material contains water, the content of the water relative to the total mass of the solid material is preferably 0.01 to 0.5 mass%, more preferably 0.01 to 0.1 mass%.

The content of the water contained in the solid material is obtained from the difference between the weight loss of the solid material measured by a simultaneous TG-DTA analyzer, and the total content of the solvent and the specific compound in the solid material measured by a headspace GC/MS apparatus. More specific measurement methods are described in EXAMPLES.

### <Ratio S>

In the present solid material, as described above, the ratio of the total content of the solvent F3 and the specific compound to the total content of the solvent and the specific compound ((the content of the solvent F3 + the content of the specific compound)/(the content of the solvent + the content of the specific compound)), that is the ratio S, is 90.0 mass% or less.

The ratio S is preferably 0.5 to 60.0 mass%, more preferably 1.0 to 50.0 mass%, further preferably 1.0 to 12.0 mass%.

When the ratio S is the upper limit value or less, the solid material will be more excellent in grindability, and when the ratio S is the lower limit value or more, the solid material tends to be less agglomerated, and will be more excellent in flowability.

In the present solid material, the content of the solvent relative to the total mass of the solid material is preferably 0.01 to 2 mass%, more preferably 0.01 to 1.5 mass%.

The present solid material may be in the form of granules (beads), pellets or threads.

### (Method for producing solid material)

The present solid material may be produced, for example, by a production method of polymerizing the above monomers (tetrafluoroethylene, ethylene and the specific compound) in a polymerization solvent to produce the copolymer, heating a mixture containing the copolymer, the polymerization solvent and water with stirring to granulate the copolymer, and separating the polymerization solvent and unreacted monomers from the mixture, wherein when the mixture is heated, heating is conducted in two steps of a first step of heating the mixture at a lower temperature and a second step of heating the mixture at a higher temperature.

Now, the above method will be described as an example of the method for producing the present solid material.

### <Production of copolymer>

The copolymer may be produced by polymerizing the above monomers (tetrafluoroethylene, ethylene and the specific compound) in a polymerization solvent by a known method such as bulk polymerization, solution polymerization, suspension polymerization or emulsion polymerization, preferably by solution polymerization.

In the production of the copolymer, in addition to the monomers and the polymerization solvent, a polymerization initiator, a chain transfer agent and the like may be used.

The polymerization initiator is preferably a radical polymerization initiator with the temperature at which the half-life is 10 hours being 0 to 100°C, particularly preferably a radical polymerization initiator with the temperature being 20 to 90°C. Specific examples of the polymerization initiator include polymerization initiators exemplified in WO2013/015202.

The polymerization initiator may be used alone or in combination of two or more.

The amount of the polymerization initiator used is preferably 0.01 to 0.9 parts by mass, particularly preferably 0.05 to 0.5 parts by mass per 100 parts by mass of the monomers used.

The polymerization solvent may be a fluorine-containing solvent such as a hydrofluorocarbon, a hydrofluoroether or a perfluorocarbon.

The polymerization solvent may be used alone or in combination of two or more.

The polymerization solvent is preferably the solvent F, more preferably the solvent F3, further preferably use of the solvent F3 and the hydrofluoroether in combination, particularly preferably use of the solvent F3 and the solvent F4 in combination.

The amount of the polymerization solvent used is preferably 5 times or more, more preferably 7 times or more, by mass relative to the amount of the monomers used. Further, it is preferably 20 times or less, more preferably 17 times or less.

In the production of the copolymer, a chain transfer agent may be used, and use of a chain transfer agent is preferred.

In view of a high chain transfer constant and in that a small addition amount is sufficient, the chain transfer agent is preferably an alcohol such as methanol, ethanol, 2,2,2-trifluoroethanol, 2,2,3,3-tetrafluoropropanol, 1,1,1,3,3,3-hexafluoroisopropanol, or 2,2,3,3,3-pentafluoropropanol; a hydrofluorocarbon such as CF₂H₂; a hydrocarbon such as n-pentane, n-hexane or cyclohexane; a ketone such as acetone; a mercaptan such as methyl mercaptan; an ester such as methyl acetate or ethyl acetate; or an ether such as diethyl ether or methyl ethyl ether.

In view of a higher chain transfer constant and high stability of the terminal group of the copolymer, among them, preferred is at least one member selected from the group consisting of an alcohol, a hydrocarbon and a hydrofluorocarbon, more preferred is at least one member selected from the group consisting of an alcohol and a hydrocarbon, further preferred is an alcohol. Among the alcohol, methanol or ethanol is particularly preferred. In particular, in view of reactivity and availability, methanol is most preferred. The chain transfer agent may be used in combination of two or more.

The amount of the chain transfer agent used, relative to the amount of the monomers used, is preferably 0.001 times of more by mass, more preferably 0.005 times or more. The amount is preferably 5 times or less, more preferably 4 times or less.

The polymerization temperature is preferably 15 to 90°C, more preferably 20 to 80°C, particularly preferably 25 to 75°C. When the polymerization temperature is the lower limit value or more, excellent polymerizability will be achieved. When the polymerization temperature is the upper limit value or less, the melting point of the copolymer will be improved.

The polymerization pressure is preferably 0.5 to 3.0 MPa, particularly preferably 0.9 to 2.5 MPa.

The polymerization time is preferably 1 to 12 hours.

### <Granulation>

Then, granulation is conducted by heating a mixture containing the obtained copolymer, the polymerization solvent and water with stirring to separate the polymerization solvent and unreacted monomers from the container and to produce granules containing the copolymer.

In the granulation, first, a mixture containing the copolymer, the polymerization solvent and water is prepared. The mixture may be prepared, for example, by mixing a slurry containing the copolymer and the polymerization solvent with water.

For preparation of the mixture, the slurry after the production of the copolymer may be used as it is, or the slurry as concentrated or the slurry as diluted with a solvent may be used. The solvent for dilution may be the same as or different from the solvent used as the polymerization solvent, and is preferably the same.

The amount of the water used in the granulation relative to the total amount of the copolymer and the polymerization solvent may be 20 to 500 vol%, and is preferably 50 to 300 vol%.

The mixture may be prepared by adding water to a polymerization vessel containing the slurry after the production of the copolymer, or by transferring the slurry to a container (granulation vessel) different from the polymerization vessel and mixing the slurry with water in the container. It is preferred to transfer the slurry containing the copolymer and the polymerization solvent from the polymerization vessel to a granulation vessel which is preliminarily filled with water, followed by mixing.

The granulation vessel may be a container which can be closed, and which is equipped with a stirring impeller to stir the content, a heating means to heat the container or the content, and a discharge means to discharge separated gas. The stirring impeller may be a conventional impeller such as a turbine impeller or an anchor impeller. The heating means may be, for example, a jacket, a water bath, an oil bath or steam heating.

With a view to producing the solid material with a low ratio S, in the granulation while stirring the mixture containing the copolymer, the polymerization solvent and water, it is preferred to conduct first step granulation of discharging the gas at a lower discharge rate with heating at a lower temperature and second step granulation of discharging gas at a higher discharge rate with heating at a higher temperature.

It is estimated as follows. If unreacted monomers and the polymerization solvent are vaporized and separated from the copolymer by heating once at the time of the granulation, when substances such as the unreacted monomers and the polymerization solvent are vaporized, bubbles are generated in the mixture particularly in granules which have not yet been sufficiently shaped, and uneven space may be generated in the granules. In the space in the granules, the solvent F3 and the specific compound, which are relatively highly lipophilic and have high affinity with the copolymer constituting the granules, are likely to remain.

Whereas in the above case of granulation in two steps of the first step and the second step, in the first step, mainly gaseous material components such as the unreacted tetrafluoroethylene and ethylene are separated from the mixture and discharged out of the container, and in the subsequent second step, mainly substances dissolved in the mixture, such as the unreacted specific compound and the polymerization solvent are vaporized, and the vaporized substances are discharged out of the container. In such a case, in the first step, while gas which is likely to cause bubbles is slowly removed, granules which are solidified to a certain extent are formed, and then in the second step, the dissolved substances such as the unreacted specific compound and the polymerization solvent are vaporized and are rapidly removed. Thus, it is estimated that generation of uneven space in the granules is suppressed, and remaining of the solvent F3 and the specific compound in the granules can be suppressed.

The discharge rate of the gas from the container in the first step is preferably 0.01 to 0.50 kg/L/h, more preferably 0.01 to 0.40 kg/L/h, further preferably 0.01 to 0.30 kg/L/h.

When the gas discharge rate in the first step is the upper limit value or less, vaporization of the substances such as the unreacted monomers and the polymerization solvent in the first step can be suppressed, and generation of the bubbles during formation of the granules can be suppressed, whereby the ratio S of the solid material can further be suppressed.

The gas discharge rate refers to the mass of the gas discharged per hour per volume of the container used for the granulation.

The heating temperature in the first step is preferably 25 to 95°C, more preferably 30 to 90°C, further preferably 30 to 90°C. The heating temperature in the first step is preferably adjusted so that the gas discharge rate from the container in the first step is within the above range.

The pressure inside the container in the first step is preferably 0.01 to 0.80 MPa, more preferably 0.01 to 0.70 MPa, further preferably 0.01 to 0.60 MPa.

The pressere in this specification refers to a gauge pressure based on the atmospheric pressure.

The time over which the first step is conducted may, for example, be from 1 to 8 hours, preferably 1 to 6 hours.

The timing at which the first step is completed and the second step is started, may, for example, be when the pressure in the container in the first step no more changes and reaches a constant value. It can be estimated that at a point when the pressure in the container reaches a constant value, gaseous components contained in the space in the container under the conditions of the first step are almost discharged.

The gas discharge rate from the container in the second step is preferably 0.05 to 0.80 kg/L/h, more preferably 0.10 to 0.80 kg/L/h, further preferably 0.15 to 0.80 kg/L/h.

When the gas discharge rate in the second step is the lower limit value or more, substances such as the specific compound and the polymerization solvent will be quickly discharged, and the solid material with a lower ratio S can be produced. When the gas discharge rate in the second step is the upper limit value or less, the solid material excellent in the dimensional stability can be produced.

The difference obtained by subtracting the gas discharge rate from the container in the first step, from the gas discharge rate from the container in the second step, is preferably 0.1 kg/L/h or more, more preferably 0.15 kg/L/h or more, and is preferably 0.9 kg/L/h or less.

When the difference in the gas discharge rate is the lower limit value or more, the solid material with a lower ratio S can be produced.

The heating temperature of the second step is preferably 30 to 110°C, more preferably 30 to 90°C, further preferably 35 to 90°C. The heating temperature in the second step is adjusted preferably so that the gas discharge rate from the container in the second step, and the difference obtained by subtracting the gas discharge rate from the container in the first step from the gas discharge rate from the container in the second step, are within the above ranges.

The pressure inside the container in the second step is preferably 0.01 to 1.00 MPa, more preferably 0.01 to 0.80 MPa, further preferably 0.01 to 0.70 MPa. The pressure may be gauge pressure.

The time over which the second step is conducted may, for example, be 0.5 to 8 hours, preferably 1 to 6 hours.

The timing when the second step is completed may be when the amount of the solvent discharged from the container and recovered in the second step no more increases. It is estimated that when it is confirmed that the amount of the recovered solvent becomes constant, components such as the solvent discharged from the mixture containing the granules are almost discharged under conditions of the second step.

The granules obtained by the granulation may be dried as required after recovering from the container. The method for producing the present solid material preferably has a step of drying the recovered granules to obtain the present solid material.

Specific examples of drying may be a method of transferring the recovered granules to a drying machine and heating the granules. By drying, the substances such as the water and the solvent inside the granules can further be vaporized and removed.

The drying machine used for drying may, for example, be a batch rotary drier, an indirect heating drying machine, a vacuum drying machine or a hot wind drying machine.

The drying temperature is preferably 60 to 250°C, more preferably 100 to 160°C.

The drying time is preferably 1 to 48 hours, more preferably 1 to 24 hours.

The solid material obtained by the drying or the granulation may be melted and extruded by an extruder to form the solid material in other shape such as pellets or threads.

### [Composition]

The composition of the present invention (hereinafter also referred to as "the present composition") contains the present solid material, and at least one member selected from a resin other than the copolymer, a thermal stabilizer, an antioxidant, a coloring agent, an ultraviolet absorber, a filler, a crosslinking agent, a crosslinking aid and an organic peroxide (hereinafter also referred to as "other component"). By using the present composition, which contains the present solid material, it is possible to form a molded product excellent in the surface properties.

The present composition is preferably a solid.

The content of the present solid material relative to the total mass of the present composition is preferably 50 mass% or more and less than 100 mass%, more preferably 70 mass% or more and less than 100 mass%, further preferably 90 mass% or more and less than 100 mass%.

The present composition preferably contains no solvent and specific compound other than the solvent and the specific compound derived from the present solid material.

The ratio of the content of the specific compound to the total content of the solvent and the specific compound in the present composition is preferably 0.1 to 50.0 mass%, more preferably 0.5 to 50.0 mass%.

The content of the "other component" in the present composition is preferably 0.0000001 to 70 parts by mass, more preferably 0.0000005 to 60 parts by mass, further preferably 0.000001 to 50 parts by mass, per 100 parts by mass of the copolymer in the present composition.

A method for producing the present composition may be a method of melt-kneading the present solid material or a powder obtained by grinding the present solid material, and the other component used as the case requires, by a known method.

The present solid material may be ground by a known grinding machine such as a rotary mill, a hammer mill, a turbo mill or a jet mill.

Since the present solid material is excellent in grindability, by using a powder obtained by grinding the present solid material, a molded product excellent in surface smoothness can be produced. Further, by melting a powder obtained by grinding the present solid material with heating and forming the melt, a molded product with less voids can be produced.

### [Molded product]

The molded product of the present invention is obtained by molding the present solid material or the present composition. The molded product of the present invention, which is formed by using the present solid material, is excellent in surface properties.

Specific examples of the molding method include injection molding, extrusion, blow molding, press molding, rotary molding, electrostatic coating and spray forming.

The molded product of the present invention may also be a coating film formed by using the present solid material or the present composition. A method of forming the coating film includes a method of forming a coating film using a powder obtained by grinding the present solid material or the present composition containing the powder, by rotational molding, electrostatic coating or spray forming.

The thickness of the coating film is preferably 1 µm to 10 mm, more preferably 50 µm to 5 mm, further preferably 100 µm to 3 mm.

Specific examples of the molded product of the present invention include nuts, bolts, joints, films, bottles, gaskets, wire coverings, tubes, hoses, pipes, valves, sheets, seals, packings, tanks, rollers, containers, cocks, connectors, filter housings, filter cages, flow meters, pumps, wafer carriers, and wafer boxes.

The present solid material, the present composition and the above-described molded product can be used in the following applications.
Fluid transfer members for food manufacturing equipment, such as food packaging films, lining materials for fluid transfer lines used in food manufacturing processes, packings, sealing materials, and sheets;
Chemical liquid transfer members such as medicine stoppers, packaging films, lining materials for fluid transfer lines used in pharmaceutical manufacturing processes, packings, sealing materials, and sheets;
Inner lining members for chemical liquid tanks and piping in chemical plants or semiconductor factories;
Fuel transfer members such as O-rings (square rings), tubes, packings, valve cores, hoses, and sealing materials used in automotive fuel systems and peripheral devices, as well as hoses and sealing materials used in automotive AT (automatic transmission) devices;
Other automotive parts such as carburetor flange gaskets, shaft seals, valve stem seals, sealing materials, and hoses used in automotive engines and peripheral devices, as well as brake hoses, air conditioning hoses, radiator hoses, and wire covering materials;
Chemical liquid transfer members for semiconductor devices such as O-rings (square rings), tubes, packings, valve cores, hoses, sealing materials, rolls, gaskets, diaphragms, and joints used in semiconductor manufacturing equipment;
Coating and ink members such as coating rolls, hoses, tubes, and ink containers for painting equipment;
Food and beverage transfer members such as tubes, hoses, belts, packings, and joints including tubes or hoses for food and beverages; food packaging materials; and glass cooking appliances;
Waste liquid transport members such as tubes and hoses for waste liquid transport;
High-temperature liquid transport members such as tubes and hoses for high-temperature liquid transport;
Steam piping members such as tubes and hoses for steam piping;
Anti-corrosion tapes for piping, such as tapes wound around piping on ship decks and similar structures;
Various coating materials such as wire coating materials, optical fiber coating materials, transparent surface coating materials and back surface agents provided on the light-incident side surface of photovoltaic elements in solar cells;
Sliding members such as diaphragms for diaphragm pumps and various packings;
Agricultural films, and weather-resistant covers for various roofing materials and side walls;
Interior materials used in the construction field, and coating materials for glass products such as non-combustible fireproof safety glass;
Lining materials such as laminated steel sheets used in home appliance fields;
Carrier films for fuel cells.

Among these, the molded product of the present invention is particularly suitable for chemical liquid transfer members and coating materials for semiconductor devices, due to its excellent surface properties.

### EXAMPLES

Now, the present invention will be described in further detail with reference to Ex. 1 to 17 are Examples of the present invention, and Ex. 18 to 19 are Comparative Examples. However, it should be understood that the present invention is by no means restricted thereto.

Various measurement methods and evaluation methods are as follows.

### [Measurement]

### <Content of solvent and specific compound in solid material>

The contents of the solvent and the specific compound remaining in the solid material were obtained by heating the solid material to 240°C by a headspace GC/MS apparatus and analyzing gas components present in the gaseous phase in the head space to determine the contents (mass%) of the components relative to the total mass of the copolymer.

The content of the water contained in the solid material was calculated from the difference between the weight loss of the solid material measured by a simultaneous TGA-DTA analyzer and the total content of the solvent and the specific compound in the solid material measured by a headspace GC/MS apparatus. The weight loss of the solid material was obtained by heating the solid material using a TG-DTA at a heating rate of 10 °C/min from 30°C to 550°C and measuring the weights of the solid material before and after heating.

### <Contents of units in copolymer>

The contents (mol%) of units in the copolymer were calculated from the total fluorine amount measurement and melt F-NMR measurement results. The content of the E unit in the copolymer was calculated by H and ¹³C-NMR measurement.

The content of the IAH unit in the copolymer was measured by the following method. The copolymer was pressed to obtain a 200 µm film. In an infrared absorption spectrum, the absorption peak of C=O stretching vibration attributable to the IAH unit in the copolymer appears at 1870 cm⁻¹. The absorbance of the absorption peak was measured, and the content M (mol%) of the IAH units was determined using the relation M=aL. L is the absorbance at 1870 cm⁻¹, and a is a coefficient. As a, a=0.87 determined using IAH as a model compound was employed.

### <MFR (Melt flow rate)>

Using a melt index (manufactured by Technol Seven Co., Ltd.), in accordance with ASTM D3159, the mass (g) of the solid material which flowed out from an orifice with a diameter of 2 mm and a length of 8 mm in 10 minutes at a temperature of 297°C under a load of 49N was measured, and the measured value was taken as MFR (g/10min) of the copolymer.

### <Melting point>

The melting point (°C) of the copolymer was determined from an endothermic peak detected when the solid material was heated in the air atmosphere at a heating rate of 10°C/min up to 300°C using a differential scanning calorimeter (manufactured by Hitachi High-Tech Science Corporation, "DSC7020").

### [Evaluation test]

### <Production of powder>

A sample of the solid material obtained in each Ex. was ground by a rotor mill (manufactured by FRITSCH, Rotor Speed Mill P-14) at a rotational speed of 1300 rpm to obtain a powder of the solid material.

### <Production of coated test specimen>

The surface of a SUS304 stainless steel plate of 40 mm × 150 mm × 2 mm in thickness was subjected to a sand blasting treatment with 60 mesh alumina particles so as to achieve the surface roughness Ra=5 to 10 µm, and cleaned with ethanol to prepare a test substrate. The surface of the test substrate was coated with a liquid primer (manufactured by AGC Inc., "Fluon (registered trademark) IL-300J") by air spray gun for liquid coating (manufactured by MEIJI AIR COMPRESSOR MFG. CO., LTD.). The liquid primer-coated substrate was hung in an oven and baked at 300°C for 30 minutes to form a 23 µm thick primer layer thereby to obtain a primer layer-provided substrate.

The powder of the solid material was sprayed over the entire surface of the primer layer-provided substrate by electrostatic coating and baked at 275°C for 15 minutes. The operation of the electrostatic coating and the baking step was repeatedly conducted three times to form a top coat layer, thereby to obtain a coated test specimen. The thickness of the top coat layer was 200 µm.

### <Outer appearance evaluation (surface smoothness)>

The top coat layer of the coated test specimen was confirmed by visual observation and touching to evaluate the outer appearance of the coated test specimen based on the following standards. A higher evaluation result of the outer appearance of the coated test specimen indicates a more excellent grindability of the solid material.

### (Outer appearance evaluation standards)

⊚: Top coat layer formed on the entire surface of the substrate. Protrusions and recesses not visually observed on the surface of the top coat layer, and gloss observed. No protrusion and recesses touched on the surface of the top coat layer
∘: Top coat layer formed on the entire surface of the substrate. Protrusions and recesses visually observed on the surface of the top coat layer, and no gloss observed. No protrusion and recesses touched on the surface of the top coat layer.
×: Protrusions and recesses touched on the surface of the top coat layer. Or, a portion where no top coat layer was formed due to bubbles or the like visually confirmed partly on the substrate.

### [Ex. 1]

A stainless steel polymerization vessel having an internal capacity of 1.3 L (liter), equipped with a stirrer and a jacket, was evacuated of air, and 614 g of CF₃CH₂CF₂CH₃ (hereinafter also referred to as "HFC-365mfc"), 541 g of CF₃(CF₂)₄CF₂H (hereinafter also referred to as "C6H"), 10.2 g of methanol and 7.5 g of CH₂=CH(CF₂)₄F (PFBE) as the specific compound were charged. While stirring the mixture, 146 g of tetrafluoroethylene (TFE) and 8.7 g of ethylene (E) were charged, and hot water was circulated through the jacket to adjust the temperature in the polymerization vessel to 66°C (polymerization temperature). At this time, the pressure in the polymerization vessel was 1.5 MPaG (gauge pressure). After the temperature stabilized, 7 mL of tert-butylperoxy pivalate (hereinafter also referred to as "PBPV") 1 mass% solution (solvent: CF₃CH₂CF₂CH₃) was injected to initiate the polymerization. During the polymerization, a mixed gas of TFE/E=54/46 molar ratio was added so as to keep a constant inner pressure of 1.5 MPaG. Every consumption of 10 g of the TFE/E mixed gas added during polymerization, 1.0 mL (amount corresponding to 1.0 mol% relative to the total number of moles of TFE and E) of PFBE was added.

210 minutes after the start of the reaction, when the amount of the mixed gas of TFE/E=54/46 molar ratio reached 100 g, the polymerization vessel was cooled to terminate the polymerization.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and as the first step, only gas was removed. At this time, the temperature inside the container was adjusted to be within a range of 30 to 90°C so that the gas discharge rate X1/V would be 0.02 kg/L/h. When it was confirmed that the pressure inside the container reached a constant value of 0.1 MPa, the first step was terminated.

Then, as the second step, the slurry was heated to vaporize and discharge the solvent. The temperature inside the container was adjusted to be within a range of 85 to 100°C so that the discharge rate X2/V of the vaporized solvent would be 0.58 kg/L/h. The solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 1.

The discharge rate X1/V is an average gas discharge rate during the period in the first step, and the discharge rate X2/V is an average discharge rate during the period in the second step.

As a result of the above measurement, MFR of the copolymer 1 contained in the solid material 1 was 14 g/10min, the composition was TFE unit/E unit/PFBE unit=53.08/44.60/2.32 (mol%), and the melting point was 249°C.

The ratio S of the obtained solid material 1 was 6.3 mass%.

### [Ex. 2]

In the same manner as in Ex. 1 except that the type and the amount of the components used for the polymerization, the polymerization conditions, etc. were changed as identified in Table 1, TFE, ethylene and PFBE were copolymerized. "AE-3000" in Table 1 represents CF₃CH₂OCF₂CF₂H.

Then, the polymerization vessel was purged of remaining monomer gas to the atmospheric pressure, the slurry was transferred to a container having an internal capacity of 2.6 L, and water in the same volume as the slurry was added. The slurry was heated with stirred, and only gas was removed as the first step. At this time, the temperature inside the container was adjusted to be within a range of 30 to 85°C so that the gas discharge rate X1/V would be 0.06 kg/L/h. At a point when it was confirmed that the pressure in the container reached a constant value of 0.2 MPa, the first step was terminated.

Then, as the second step, the slurry was heated to vaporize and discharge the solvent. At this time, the temperature inside the container was adjusted to be within a range of 80 to 90°C so that the discharge rate X2/V of the vaporized solvent would be 0.79 kg/L/h. The solvent discharged from the container was recovered in a tank using a cooling mechanism. At a point when it was confirmed that the amount of the recovered solvent no more increased and reached a constant value, the second step was terminated to obtain granules. The obtained granules were dried in an oven at 150°C to obtain granular solid material 2.

As a result of measurement, MFR of the copolymer 2 obtained in the solid material 2 was 6 g/10min, the composition was TFE unit/E unit/PFBE unit=53.41/45.58/1.01 (mol%), and the melting point was 261°C.

The ratio S of the obtained solid material 2 was 34.9 mass%.

### [Ex. 3]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.05 kg/L/h. At a point when it was confirmed that the pressure inside the container reached a constant value of 0.4 MPa, the first step was terminated.

Then, as the second step, the slurry was heated to vaporize and discharge the solvent. At this time, the temperature inside the container was adjusted to be within a range of 80 to 95°C to that the discharge rate X2/V of the vaporized solvent would be 0.78 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 3.

As a result of measurement, MFR of the copolymer 3 contained in the solid material 3 was 12 g/10min, the composition was TFE unit/E unit/PFBE unit=53.36/45.10/1.54 (mol%), and the melting point was 256°C.

The ratio S of the obtained solid material 3 was 44.9 mass%.

### [Ex. 4]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.06 kg/L/h. At a point when it was confirmed that the pressure inside the container reached a constant value of 0.3 MPa, the first step was terminated.

Then, as the second step, the slurry was heated to vaporize and discharge the solvent. At this time, the temperature inside the container was adjusted to be within a range of 80 to 95°C so that the discharge rate X2/V of the vaporized solvent would be 0.79 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 4.

As a result of measurement, MFR of the copolymer 4 contained in the solid material 4 was 11 g/10min, the composition was TFE unit/E unit/PFBE unit=53.40/45.50/1.10 (mol%), and the melting point was 261°C.

The ratio S of the obtained solid material 4 was 10.9 mass%.

### [Ex. 5]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.04 kg/L/h. At a point when it was confirmed that the pressure inside the container reached a constant value of 0.3 MPa, the first step was terminated.

Then, as the second step, the slurry was heated to vaporize and discharge the solvent. At this time, the temperature inside the container was adjusted to be within a range of 80 to 100°C so that the discharge rate X2/V of the vaporized solvent would be 0.81 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 5.

As a result of measurement, MFR of the copolymer 5 contained in the solid material 5 was 23 g/10min, the composition was TFE unit/E unit/PFBE unit=53.23/44.70/2.07 (mol%), and the melting point was 251°C. The ratio S of the obtained solid material 5 was 15.3 mass%.

### [Ex. 6]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.05 kg/L/h. At a point when it was confirmed that the pressure inside the container reached a constant value of 0.1 MPa, the first step was terminated.

Then, as the second step, the slurry was heated to vaporize and discharge the solvent. At this time, the temperature inside the container was adjusted to be within a range of 80 to 105°C so that the discharge rate X2/V of the vaporized solvent would be 0.21 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 6.

As a result of measurement, MFR of the copolymer 6 contained in the solid material 6 was 25 g/10min, the composition was TFE unit/E unit/PFBE unit=58.00/38.50/3.50 (mol%), and the melting point was 233°C.

The ratio S of the obtained solid material 6 was 5.1 mass%.

### [Ex. 7]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.05 kg/L/h. At a point when it was confirmed that the pressure inside the container reached a constant value of 0.3 MPa, the first step was terminated.

Then, as the second step, the slurry was heated to vaporize and discharge the solvent. At this time, the temperature inside the container was adjusted to be within a range of 80 to 100°C so that the discharge rate X2/V of the vaporized solvent would be 0.43 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 7.

As a result of measurement, MFR of the copolymer 7 contained in the solid material 7 was 13 g/10min, the composition was TFE unit/E unit/PFBE unit=58.10/38.40/3.50 (mol%), and the melting point was 233°C.

The ratio S of the obtained solid material 7 was 17.2 mass%.

### [Ex. 8]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.10 kg/L/h. At a point when it was confirmed that the pressure inside the container reached a constant value of 0.3 MPa, the first step was terminated.

Then, as the second step, the slurry was heated to vaporize and discharge the solvent. At this time, the temperature inside the container was adjusted to be within a range of 80 to 105 °C so that the discharge rate of the vaporized solvent X2/V would be 0.78 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 8.

As a result of measurement, MFR of the copolymer 8 contained in the solid material 8 was 38 g/10min, the composition was TFE unit/E unit/PFBE unit=57.48/38.92/3.60 (mol%), and the melting point was 233°C.

The ratio S of the obtained solid material 8 was 6.1 mass%.

### [Ex. 9]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.03 kg/L/h. At a point when it was confirmed that the pressure inside the container reached a constant value of 0.4 MPa, the first step was terminated.

Then, as the second step, the slurry was heated to vaporize and discharge the solvent. At this time, the temperature inside the container was adjusted to be within a range of 80 to 97 °C so that the discharge rate X2/V of the vaporized solvent would be 0.78 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 9.

As a result of measurement, MFR of the copolymer 9 obtained in the solid material 9 was 11 g/10min, the composition was TFE unit/E unit/PFBE unit=57.80/38.20/4.00 (mol%), and the melting point was 227°C.

The ratio S of the obtained solid material 9 was 20.3 mass%.

### [Ex. 10]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.05 kg/L/h. At a point when it was confirmed that the pressure inside the container reached a constant value of 0.2 MPa, the first step was terminated.

Then, as the second step, the slurry was heated to vaporize and discharge the solvent. At this time, the temperature inside the container was adjusted to be within a range of 80 to 100°C so that the discharge rate X2/V of the vaporized solvent would be 0.56 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 10.

As a result of measurement, MFR of the copolymer 10 contained in the solid material 10 would be 23 g/10min, the composition was TFE unit/E unit/PFBE unit=58.52/39.34/2.14 (mol%), and the melting point was 244°C.

The ratio S of the obtained solid material 10 was 16.0 mass%.

### [Ex. 11]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.25 kg/L/h. At a point when it was confirmed that the pressure inside the container reached a constant value of 0.3 MPa, the first step was terminated.

Then, as the second step, the slurry was heated to vaporize and discharge the solvent. At this time, the temperature inside the container was adjusted to be within a range of 80 to 100°C so that the discharge rate X2/V of the vaporized solvent would be 0.49 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 11.

As a result of measurement, MFR of the copolymer 11 contained in the solid material 11 would be 5 g/10min, the composition was TFE unit/E unit/PFBE unit=58.30/38.50/3.20 (mol%), and the melting point was 231°C.

The ratio S of the obtained solid material 11 was 28.8 mass%.

### [Ex. 12]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.03 kg/L/h. At a point when it was confirmed that the pressure inside the container reached a constant value of 0.2 MPa, the first step was terminated.

Then, as the second step, the slurry was heated to vaporize and discharge the solvent. At this time, the temperature inside the container was adjusted to be within a range of 80 to 105°C so that the discharge rate X2/V of the vaporized solvent would be 0.58 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 12.

As a result of measurement, MFR of the copolymer 12 contained in the solid material 12 was 7 g/10min, the composition was TFE unit/E unit/PFBE unit=48.60/48.50/2.90 (mol%), and the melting point was 248°C.

The ratio S of the obtained solid material 12 was 10.4 mass%.

### [Ex. 13]

A stainless steel polymerization vessel having an internal capacity of 1.3 L (liter), equipped with a stirrer and a jacket, was evacuated of air, and 1148 g of CF₃CH₂OCF₂CF₂H (AE-3000), 23 g of CF₃(CF₂)₄CF₂H (C6H), 5.5 g of methanol and 7.0 g of CH₂=CHCF₂CF₃ as the specific compound was charged. While the mixture was stirred, 155 g of TFE and 5 g of ethylene (E) were charged, and hot water was flowed through the jacket to adjust the temperature inside the polymerization vessel to be 66°C (polymerization temperature). At this time, the pressure inside the polymerization vessel was 1.5 MPaG. After the temperature stabilized, 17 mL of tert-butylperoxy pivalate (PBPV) 1 mass% solution (solvent: CF₃CH₂OCF₂CF₂H) was injected to initiate the polymerization. During the polymerization, a mixed gas of TFE/E=60/40 (molar ratio) was added so as to keep a constant internal pressure of 1.5 MPaG. As the mixed gas was charged, CH₂=CHCF₂CF₃ in an amount corresponding to 2.0 mol% relative to the total number of moles of TFE and E, and itaconic anhydride (hereinafter also referred to as "IAH") in an amount corresponding to 0.8 mol%, were continuously charged. 360 minutes after the start of the reaction, at a point when the amount of the mixed gas of TFE/E=60/40 (molar ratio) reached 100 g, the polymerization vessel was cooled to terminate the polymerization.

The polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.02 kg/L/h. At a point when it was confirmed that the pressure inside the container reached a constant value of 0.2 MPa, the first step was terminated.

Then, as the second step, the slurry was heated to vaporize and discharge the solvent. At this time, the temperature inside the container was adjusted to be within a range of 80 to 100°C so that the discharge rate X2/V of the vaporized solvent would be 0.30 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 13.

As a result of measurement, MFR of the copolymer 13 contained in the solid material 13 was 25 g/10min, the composition was TFE unit/E unit/CH₂=CHCF₂CF₃ unit/IAH unit=53.40/43.75/2.10/0.75 (mol%), and the melting point was 236°C.

The ratio S of the obtained solid material 13 was 18.0 mass%.

### [Ex. 14]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 85°C so that the gas discharge rate X1/V would be 0.03 kg/L/h. At a point when it was confirmed that the pressure inside the container reached a constant value of 0.2 MPa, the first step was terminated.

Then, as the second step, the slurry was heated to vaporize and discharge the solvent. At this time, the temperature inside the container was adjusted to be within a range of 80 to 100°C so that the discharge rate X2/V of the vaporized solvent would be 0.65 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 14.

As a result of measurement, MFR of the copolymer 14 contained in the solid material 14 was 28 g/10min, the composition was TFE unit/E unit/PFBE unit=58.00/38.49/3.51 (mol%), and the melting point was 236°C.

The ratio S of the obtained solid material 14 was 50.4 mass%.

### [Ex. 15]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 40 to 95°C so that the gas discharge rate X1/V would be 0.03 kg/L/h. At a point when it was confirmed that the pressure inside the container reached a constant value of 0.3 MPa, the first step was terminated.

Then, as the second step, the slurry was heated to vaporize and discharge the solvent. At this time, the temperature inside the container was adjusted to be within a range of 90 to 110°C so that the discharge rate X2/V of the vaporized solvent would be 0.18 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 15.

As a result of measurement, MFR of the copolymer 15 contained in the solid material 15 was 7 g/10min, the composition was TFE unit/E unit/PFBE unit=53.10/45.96/0.94 (mol%), and the melting point was 261°C.

The ratio S of the obtained solid material 15 was 2.4 mass%.

### [Ex. 16]

In the same manner as in Ex. 1 except that the type and the amount of the components used for the polymerization, the polymerization conditions, etc. were changed as identified in Table 1, TFE, ethylene and PFBE were copolymerized.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 80 °C so that the gas discharge rate X1/V would be 0.05 kg/L/h. At a point when it was confirmed that the pressure inside the container reached a constant value of 0.4 MPa, the first step was terminated.

Then, as the second step, the slurry was heated to vaporize and discharge the solvent. At this time, the temperature inside the container was adjusted to be within a range of 70 to 88 °C so that the discharge rate X2/V of the vaporized solvent would be 0.42 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 16.

As a result of measurement, MFR of the copolymer 16 contained in the solid material 16 was 10 g/10min, the composition was TFE unit/E unit/PFBE unit=53.10/45.30/1.60 (mol%), and the melting point was 253°C.

The ratio S of the obtained solid material 16 was 83.5 mass%.

### [Ex. 17]

In the same manner as in Ex. 1 except that the type and the amount of the components used for the polymerization, the polymerization conditions, etc. were changed as identified in Table 1, TFE, ethylene and CF₂=CFO(CF₂)₂CF₃ were copolymerized. In Ex. 17, 10.4 g of CF₂=CFO(CF₂)₂CF₃ was used instead of 7.5 g of PFBE. Further, "Novec7100" in Table 1 represents F(CF₂)₄OCH₃.

Then, the polymerization vessel was purged of remaining monomer gas to the atmospheric pressure, the slurry was transferred to a container having an internal capacity of 2.6 L, and water in the same volume as the slurry was added. The slurry was heated with stirring, and only gas was removed as the first step. At this time, the temperature inside the container was adjusted to be within a range of 30 to 75°C so that the gas discharge rate X1/V would be 0.09 kg/L/h. At a point when it was confirmed that the pressure inside the container reached a constant value of 0.5 MPa, the first step was terminated.

Then, as the second step, the slurry was heated to vaporize and discharge the solvent. At this time, the temperature inside the container was adjusted to be within a range of 70 to 90°C so that the discharge rate X2N of the vaporized solvent would be 0.30 kg/L/h. Further, the solvent discharged from the container was recovered in a tank using a cooling mechanism. At a point when it was confirmed that the amount of the solvent recovered no more increased and reached a constant value, the second step was terminated to obtain granules. The obtained granules were dried in an oven at 150°C to obtain granular solid material 17.

As a result of measurement, MFR of the copolymer 17 contained in the solid material 17 was 15 g/10min, the composition was TFE unit/E unit/CF₂=CFO(CF₂)₂CF₃ unit=53.24/44.35/2.41 (mol%), and the melting point was 248°C.

The ratio S of the obtained solid material 17 was 88.4 mass%.

### [Ex. 18]

In the same manner as in Ex. 2, TFE, ethylene and PFBE were copolymerized. Then, the polymerization vessel was purged of remaining monomer gas to the atmospheric pressure, the slurry was transferred to a container having an internal capacity of 2.6 L, and water in the same volume as the slurry was added. The slurry was heated with stirring, to discharge gas and the vaporized solvent. At this time, the temperature inside the container was adjusted to be within a range of 30 to 95°C so that the discharge rate of the gas and the vaporized solvent would be 0.25 kg/L/h. The solvent discharged from the container was recovered in a tank using a cooling mechanism. At a point when it was confirmed that the amount of the recovered solvent no more increased and reached a constant value, the heating was terminated to obtain granules. The obtained granules were heated in an oven at 150°C to obtain granular solid material 18.

As a result of measurement, MFR of the copolymer 18 contained in the solid material 18 was 6 g/10min, the composition was TFE unit/E unit/PFBE unit=53.41/45.58/1.01 (mol%), and the melting point was 261°C.

The ratio S of the obtained solid material 18 was 95.3 mass%.

### [Ex. 19]

In the same manner as in Ex. 3, TFE, ethylene and PFBE were copolymerized. Then, the polymerization vessel was purged of remaining monomer gas to the atmospheric pressure, the slurry was transferred to a container having an internal capacity of 2.6 L, and water in the same volume as the slurry was added. The slurry was heated with stirring to discharge gas and the vaporized solvent. At this time, the temperature inside the container was adjusted to be within a range of 30 to 105°C so that the discharge rate of the gas and the vaporized solvent would be 0.90 kg/L/h. The solvent discharged from the container was recovered in a tank using a cooling mechanism. At a point when it was confirmed that the amount of the recovered solvent no more increased and reached a constant value, the heating was terminated to obtain granules. The obtained granules were dried in an oven at 150°C to obtain granular solid material 19.

As a result of measurement, MFR of the copolymer 19 contained in the solid material 19 was 12 g/10min, the composition was TFE unit/E unit/PFBE unit=53.40/45.06/1.54 (mol%), and the melting point was 256°C.

The ratio S of the obtained solid material 19 was 97.6 mass%.

In Table 1, the compounds used for the production of the copolymer, the copolymerization conditions, and the conditions for the production of the solid material in each Ex. are shown.

In Table 2, the composition and the physical properties of the copolymer obtained in each Ex., and the solid material measurement results and evaluation results are shown.

In Tables, the "TFE unit" column, the "E unit" column, the "A unit" column and the "IAH unit" column represent the contents (unit: mol%) of the respective units relative to all units contained in the copolymer obtained in each Ex.

In Tables, the "Solvent" column of "Solid material" represents the ratio (unit: mass%) of the total content of the solvent contained in the solid material relative to the total amount of the solid material obtained in each Ex.

All of the solid materials in Ex. 1 to 17 contained water. All of the solid materials in Ex. 2 to 16 contained CF₃CH₂OCF₂CF₂H corresponding to the solvent F4, and the solid material in Ex. 17 contained F(CF₂)₄OCH₃ corresponding to the solvent F4.

**Table 1 (1)**

| Ex. | Solvent | | | | Monomer | | | Polymerization initiator | Chain transfer agent |
|---|---|---|---|---|---|---|---|---|---|
| | Type | Amount | Type | Amount | Specific compound | TFE | E | PBPV | MeOH |
| | | g | | g | g | g | g | mL | g |
| 1 | HFC-365mfc | 614 | C6H | 541 | 7.5 | 146.0 | 8.7 | 7 | 10.2 |
| 2 | AE-3000 | 1115 | C6H | 67 | 3.4 | 144.0 | 6.5 | 3 | 8.9 |
| 3 | AE-3000 | 1057 | C6H | 133 | 5.9 | 144.0 | 6.5 | 7 | 6.5 |
| 4 | AE-3000 | 1168 | C6H | 7 | 3.4 | 144.0 | 6.5 | 8 | 11.2 |
| 5 | AE-3000 | 1115 | C6H | 67 | 7.9 | 144.0 | 6.5 | 13 | 7.3 |
| 6 | AE-3000 | 1168 | C6H | 7 | 12.4 | 163.0 | 5.0 | 19 | 0.8 |
| 7 | AE-3000 | 1057 | C6H | 133 | 12.4 | 163.0 | 5.0 | 18 | 0.6 |
| 8 | AE-3000 | 1115 | C6H | 67 | 12.4 | 163.0 | 5.0 | 20 | 1.4 |
| 9 | AE-3000 | 1080 | C6H | 107 | 16.1 | 174.0 | 5.0 | 24 | 1.0 |
| 10 | AE-3000 | 1068 | C6H | 120 | 7.0 | 174.0 | 5.0 | 13 | 7.3 |
| 11 | AE-3000 | 998 | C6H | 200 | 13.7 | 174.0 | 5.0 | 12 | 4.4 |
| 12 | AE-3000 | 1162 | C6H | 13 | 10.8 | 150.0 | 12.0 | 12 | 3.9 |
| 13 | AE-3000 | 1148 | C6H | 23 | 7.0 | 155.0 | 5.0 | 17 | 5.5 |
| 14 | C6H | 1131 | AE-3000 | 176 | 17.8 | 179.0 | 6.0 | 21 | 3.7 |
| 15 | C6H | 998 | AE-3000 | 293 | 4.0 | 161.0 | 7.3 | 3 | 9.6 |
| 16 | C6H | 665 | AE-3000 | 585 | 6.9 | 150.8 | 6.8 | 12 | 4.1 |
| 17 | Novec 7100 | 492 | C6H | 811 | 10.4 | 161.0 | 7.3 | 12 | 7.6 |
| 18 | AE-3000 | 1115 | C6H | 67 | 3.4 | 144.0 | 6.5 | 3 | 8.9 |
| 19 | AE-3000 | 1057 | C6H | 133 | 5.9 | 144.0 | 6.5 | 7 | 6.5 |

**Table 1 (2)**

| Ex. | Post feed gas composition | | Post feed | Polymerization temperature | Polymerization time | First step | Second step |
|---|---|---|---|---|---|---|---|
| | TFE | E | Specific compound | | | X1/V | X2/V |
| | mol% | mol% | mL | °C | min | kg/L/h | kg/L/h |
| 1 | 54 | 46 | 1.0 | 66 | 210 | 0.02 | 0.58 |
| 2 | 54 | 46 | 0.4 | 72 | 189 | 0.06 | 0.79 |
| 3 | 54 | 46 | 0.7 | 72 | 150 | 0.05 | 0.78 |
| 4 | 54 | 46 | 0.5 | 72 | 175 | 0.06 | 0.79 |
| 5 | 54 | 46 | 0.9 | 72 | 173 | 0.04 | 0.81 |
| 6 | 60 | 40 | 1.3 | 72 | 165 | 0.05 | 0.21 |
| 7 | 60 | 40 | 1.3 | 72 | 151 | 0.05 | 0.43 |
| 8 | 60 | 40 | 1.4 | 72 | 169 | 0.10 | 0.78 |
| 9 | 60 | 40 | 1.5 | 66 | 173 | 0.03 | 0.78 |
| 10 | 60 | 40 | 0.9 | 66 | 265 | 0.05 | 0.56 |
| 11 | 60 | 40 | 1.2 | 66 | 270 | 0.25 | 0.49 |
| 12 | 50 | 50 | 1.4 | 66 | 265 | 0.03 | 0.58 |
| 13 | 60 | 40 | 0.6 | 66 | 360 | 0.02 | 0.30 |
| 14 | 60 | 40 | 1.3 | 66 | 260 | 0.03 | 0.65 |
| 15 | 54 | 46 | 0.4 | 66 | 280 | 0.03 | 0.18 |
| 16 | 54 | 46 | 0.7 | 72 | 167 | 0.05 | 0.42 |
| 17 | 54 | 46 | 1.0 | 66 | 260 | 0.09 | 0.30 |
| 18 | 54 | 46 | 0.4 | 72 | 189 | 0.25 | |
| 19 | 54 | 46 | 0.7 | 72 | 150 | 0.90 | |

**Table 2**

| Ex. | Copolymer composition | | | | Copolymer physical properties | | Solid material | | | | Evaluation |
|---|---|---|---|---|---|---|---|---|---|---|---|
| | TFE unit | E unit | A unit | IAH unit | Melting point | MFR | Ratio S | Solvent F3 | Specific compound | Solvent | Grindability |
| | mol% | mol% | mol% | mol% | °C | g/10min | mass% | mass% | mass% | mass% | |
| 1 | 53.08 | 44.60 | 2.32 | - | 249 | 14 | 6.3 | 0.0050 | 0.001 | 0.095 | ⊚ |
| 2 | 53.41 | 45.58 | 1.01 | - | 261 | 6 | 34.9 | 0.1290 | 0.014 | 0.396 | ○ |
| 3 | 53.36 | 45.10 | 1.54 | - | 256 | 12 | 44.9 | 0.1405 | 0.003 | 0.317 | ○ |
| 4 | 53.40 | 45.50 | 1.10 | - | 261 | 11 | 10.9 | 0.0277 | 0.003 | 0.278 | ⊚ |
| 5 | 53.23 | 44.70 | 2.07 | - | 251 | 23 | 15.3 | 0.0215 | 0.003 | 0.157 | ○ |
| 6 | 58.00 | 38.50 | 3.50 | - | 233 | 25 | 5.1 | 0.0037 | 0.003 | 0.128 | ⊚ |
| 7 | 58.10 | 38.40 | 3.50 | - | 233 | 13 | 17.2 | 0.0211 | 0.003 | 0.137 | ○ |
| 8 | 57.48 | 38.92 | 3.60 | - | 233 | 38 | 6.1 | 0.0043 | 0.003 | 0.120 | ⊚ |
| 9 | 57.80 | 38.20 | 4.00 | - | 227 | 11 | 20.3 | 0.0356 | 0.003 | 0.187 | ○ |
| 10 | 58.52 | 39.34 | 2.14 | - | 244 | 23 | 16.0 | 0.0194 | 0.003 | 0.137 | ○ |
| 11 | 58.30 | 38.50 | 3.20 | - | 231 | 5 | 28.8 | 0.0488 | 0.003 | 0.177 | ○ |
| 12 | 48.60 | 48.50 | 2.90 | - | 248 | 7 | 10.4 | 0.0021 | 0.001 | 0.029 | ⊚ |
| 13 | 53.40 | 43.75 | 2.10 | 0.75 | 236 | 25 | 18.0 | 0.0027 | 0.001 | 0.019 | ○ |
| 14 | 58.00 | 38.49 | 3.51 | - | 236 | 28 | 50.4 | 0.0293 | 0.001 | 0.059 | ○ |
| 15 | 53.10 | 45.96 | 0.94 | - | 261 | 7 | 2.4 | 0.0004 | 0.003 | 0.141 | ⊚ |
| 16 | 53.10 | 45.30 | 1.60 | - | 253 | 10 | 83.5 | 0.7900 | 0.003 | 0.947 | ○ |
| 17 | 53.24 | 44.35 | 2.41 | - | 248 | 15 | 88.4 | 0.4500 | 0.001 | 0.509 | ○ |
| 18 | 53.41 | 45.58 | 1.01 | - | 261 | 6 | 95.3 | 0.4000 | 0.003 | 0.420 | × |
| 19 | 53.40 | 45.06 | 1.54 | - | 256 | 12 | 97.6 | 0.2000 | 0.003 | 0.205 | × |

As evident from the tables, it was confirmed that the solid material of which the ratio of the total content of the solvent F3 and the specific compound to the total content of the solvent and the specific compound is 90.0 mass% or less, is excellent in grindability (Ex. 1 to 17).

The entire disclosure of Japanese Patent Application No. 2023-220827 filed on December 27, 2023, including specification, claims and summary is incorporated herein by reference in its entirety.

## Claims

1. A solid material comprising:
a copolymer having a unit based on tetrafluoroethylene, a unit based on ethylene, and a unit based on a specific compound selected from the group consisting of a compound represented by formula (1) and a compound represented by formula (2),
the specific compound, and
a solvent that is a compound different from the specific compound,
wherein the solvent contains a fluorine-containing solvent containing a hydrogen atom and a fluorine atom and optionally having an ether bond,
the fluorine-containing solvent contains a hydrofluorocarbon having a group represented by formula (3), and
the ratio of the total content of the hydrofluorocarbon and the specific compound to the total content of the solvent and the specific compound, is 90.0 mass% or less:
CX¹₂=CX²(CF₂)ₘF (1)
CF₂=CF-O-(CF₂)ₙF (2)
CF₃(CF₂)ₚ-* (3)
in formula (1), X¹ and X² are each independently a hydrogen atom or a fluorine atom, and m is an integer of 1 to 6,
in formula (2), n is an integer of 1 to 6,
in formula (3), p is an integer of 1 or more, and * represents a binding site to the adjacent atom.

2. The solid material according to Claim 1, wherein the content of the unit based on tetrafluoroethylene relative to all units contained in the copolymer is 48.00 to 64.90 mol%.

3. The solid material according to Claim 1 or 2, wherein the content of the unit based on ethylene relative to all units contained in the copolymer is 35.00 to 51.90 mol%.

4. The solid material according to Claim 1 or 2, wherein the content of the unit based on the specific compound in the copolymer relative to all units contained in the copolymer is 0.10 to 5.00 mol%.

5. The solid material according to Claim 1 or 2, wherein the fluorine-containing solvent further contains a hydrofluoroether.

6. The solid material according to Claim 5, wherein the hydrofluoroether contains a compound represented by formula (4):
R¹-O-R² (4)
in formula (4), R¹ is a C₂₋₆ fluoroalkyl group, R² is a C₁₋₄ fluoroalkyl group or alkyl group, and the total number of carbon atoms of R¹ and R² is 8 or less.

7. The solid material according to Claim 1 or 2, wherein the solvent further contains water.

8. The solid material according to Claim 1 or 2, wherein the content of the solvent relative to the total mass of the solid material is 0.01 to 2 mass%.

9. The solid material according to Claim 1 or 2, wherein the content of the hydrofluorocarbon relative to the total mass of the solid material is 0.001 to 1.5 mass%.

10. A composition comprising the solid material as defined in Claim 1 or 2, and at least one component selected from the group consisting of a resin other than the copolymer, a thermal stabilizer, an antioxidant, a coloring agent, an ultraviolet absorbing agent, a filler, a crosslinking agent, a crosslinking aid and an organic peroxide.

11. A molded product, obtained by molding the solid material as defined in Claim 1 or 2.

12. A molded product, obtained by molding the composition as defined in Claim 10.
